# EUROPEAN PATENT APPLICATION

(11) **EP 4 681 977 A1**
(43) Date of publication of application: **21.01.2026**
(21) Application number: 24188832.0
(22) Date of filing: 16.07.2024
(51) Int. Cl.: B60L 53/16

(54) **A SYSTEM AND METHOD FOR THE ILLUMINATION OF CAR CHARGING APPARATUS**

(71) Applicant: SKYER v/ Thomas Græbe, 3070 Snekkersten (DK)
(72) Inventor: Græbe, Thomas, 3070 Snekkersten (DK)
(74) Representative: Inspicos P/S

(57) **Abstract**

The present invention relates to a system and method for illuminating an electric car charging apparatus, or the like, so that connection between a charge source and a charge receiver can be more easily established during situations of poor visibility, e.g., at night, bad weather etc. The system and method comprise a motion detector capable of detecting motion of a charging connector, and in the event of motion, a light is turned on to illuminate the charging area. The invention also relates to an add on device that can be fitted to existing charging systems to achieve the same illuminating result.

## Description

### FIELD OF THE INVENTION

The present invention relates to a system and method for illuminating an electric car charging apparatus so that connection between a charge source and a charge receiver can illuminated and thus more easily established during situations of poor visibility, e.g., at night, bad weather etc.

### BACKGROUND OF THE INVENTION

Despite the prevalence of electricity, and thus the ability to easily and effectively provide illumination, within an electric vehicle, the area surrounding the charging port and charging cable is often neglected. Thus, it often requires ample effort from the operator to connect the charging port to a charging connector/cable, especially when the system is in an area of poor illumination, such as at night, in the rain etc.

### OBJECT OF THE INVENTION

It is an object of embodiments of the invention to provide a system and method for illuminating an electric car charging apparatus so that connection between a charge source and a charge receiver can be more easily established with the support of illumination during situations of poor visibility, e.g., at night, bad weather etc.

Additionally, the invention may provide embodiments whereby existing charge apparatus may be adapted to achieve the desired system and method.

### SUMMARY OF THE INVENTION

In a first aspect the present invention relates to a system for illuminating a charging port, the system comprising:
a. a charging connector, configured to engage with the charging port, connected to a charging cable and comprising:
   i. a light source configured to emit radiation in a predetermined direction,
   ii. a motion sensor configured to detect motion of the charging connector and
   iii. a controller configured to receive information from the motion sensor and as a result thereof activate the light source.

In the present context, the charging port may be an electronic hardware interface configured to be connected to another electronic hardware device. In this context, the other electronic device may be the charging connector. In other words, the charging port may be an electrical socket, configured to receive a charging connector to form an electronic connection. Thus, the charging port may comprise electrical contacts, e.g., pins, pads, metallically lined holes or the like, and an insulative casing. The electrical contacts may be positioned in the centre, on top of, to the side of, or on the bottom of, or inside the insulative casing. Alternatively, the charging port may be an electronic hardware interface suited for inductive power/signal transfer such as one comprising an inductive coil and insulative casing.

In the present context, the charging connector may be an electronic hardware device configured to be engaged with another electronic hardware device (in this instance the charging port) to form an electronic connection. In other words, the charging connector is configured to interface with the charging port so that electronic charge may flow between the charging connector and the charging port. The charging connector may be a plug and thus the charging connector may comprise an insulative casing with metal pins that fit into holes in the charging port. Alternatively, the charging connector may be an electronic hardware device suited for inductive power/signal transfer such as one comprising an inductive coil and an insulative casing. In this case, engagement between the charging connector and the charging port may be alignment of engagement of the insulative casing as charge transfer may occur through electromagnetic induction, and therefore contact between metallic connectors may not be required.

Note that other wireless charging methods also exist, such as capacitive charging and the charging port and charging connector may be configured to transfer energy through these methods.

In the present context the charging connector is connected to the charging cable. The charging cable may be an electrical cable comprising one or more wires running side by side, surrounded by an insulated sheath. The charging cable may be used as an electrical conductor to carry an electrical current/charge. The charging cable may have a length of between 50cm and 20m, such as between 1 and 10m, such as between 2 and 8m.

It may be the case that the charging port is located in a non-illuminated environment. Thus, if connection between the charging connector and the charging port is desired, for example, during nighttime, visibility may be poor and thus it may be challenging to locate and engage the charging connector and the charging port. Naturally, other poor visibility scenarios exist. Therefore, the charging connector comprises a light source with the aim of improving visibility.

In the present context, the light source is a device configured to produce radiation, such as visible light, for the purpose of illumination of, in this context, the charging port. Further, in this context, the light source may be electronic, such as an LED, halogen bulb, CFL, OLED or the like.

The light source may be a single component, or it may be a plurality of components connected to each other. The light source may be physically located within the charging connector, such as inserted into or inside the insulative casing, or positioned on top, to the side, on the surface, or on the bottom of the insulative casing. The insulative casing may form a cavity wherein the light source is placed in the cavity. Electrical contacts or surfaces of the connector may also be provided in the cavity. The cavity may then be partially or fully enclosed. If the light source is fully enclosed in the cavity, the insulative casing may be transparent, or at least translucent to the radiant energy emitted from the light source.

The light source may emit blue, red, white, yellow, green, pink purple, or any other colour light. The light source may be bright enough to illuminate the charging port, and thus the light source may emit radiation that hits the surface of the charging port with sufficient light.

Note that if the light source emits radiation outside of that of visible light, the charging port or other parts of the system may comprise surfaces that are fluorescent when the radiation impacts them.

It is the role of the light source within the system to illuminate the charging port and thus the radiation from the light source is emitted in a predetermined direction. Thus, the predetermined direction is a line/axis along which the majority of the radiation emitted from the light source is travelling. The predetermined direction may be parallel with the central axis of the charge connector. Note that the radiation from the light source may not be emitted along a single axis, the radiation may be emitted radially from the light source. Therefore, the predetermined direction may be the centre of radially emitted radiation.

It is preferred that the light source is only turned on when the charging connector is to be initially connected to the charging port to avoid energy wastage and unnecessary light pollution.

Thus, in the present context, the charging connector comprises a motion sensor. The motion sensor is an electronic or mechanical device that is designed to detect movement. The motion sensor may also measure the amount or direction of the movement.

There are different types of motion sensor which may be comprised in the system. The first type of motion sensor may be configured to detect movement of itself and/or the object it is attached to. Therefore, in this case, the motion sensor may be an accelerometer, a tilt sensor, a rotation sensor, vibration sensor or the like. The motion sensor may be attached to the charging connector so that it is the movement of the charging connector that is to be detected. In other words, when an operator engages with the charging connector with the aim of connecting it to the charging port, the motion sensor would detect the movement of the charging connector.

Alternatively, the motion sensor may detect relative motion between the motion sensor or the charging connector and its surroundings. In this instance the motion sensor may be a PiR, LiDAR, camera, video camera or the like, e.g., a button press.

An alternative type of motion sensor may be an IR, ultrasonic or similar sensor, positioned on the charging connector that is triggered when the operator is in close proximity to the charging connector.

In the present context the controller is an electronic circuit that is configured to receive information from the motion sensor and activate the light source. In the simplest situation, the controller may be a simple timing circuit trigged by a signal from the motion sensor and turning on and potentially off the light source. In the more complex case, the controller may be a digital circuit configured to also carry out algorithms on the signals and control the light source accordingly. Alternatively, the system may combine the sensor and the controller via use of a tilt sensor as a switch.

In the present context the information is an electronic signal. In this context it may be a binary value encoding whether or not movement of the charging connector has occurred. The information may also be more complex and encode the type, duration, direction, or the like, of the movement.

The charging port may be physically attached to a charge receiver. Possible charge receivers may be electric cars, motorbikes, lawnmowers, taxis, tractors, tuk-tuks, lorries, trucks, vehicles, electric bikes or the like. In some contexts, a charge receiver may be a power tool, mobile phone, laptop, TV, computer, white good or the like. The charge receiver may comprise a power storage system such as a battery, capacitor or the like.

The charging cable may be physically attached to a charge source. In this context a charge source is an electric device configured to deliver electrical energy/charge into the system via the cable. Possible charge sources may be generators, photovoltaic cells, thermopiles, primary-cell batteries, the power grid, wind turbines, solar panels, water turbines or the like. Thus, when the charging connector and the charging port are connected/engaged, charge may flow from the charge source to the charge receiver powering the charge receiver, or charge may be inductively added or moved in the charge receiver.

An embodiment of the invention relates to the system where the charging connector is configured to engage with the charging port by a relative motion along the predetermined direction. Thus, the charging connector may be inserted into the charging port, or vice versa, in this instance the predetermined direction may be along a direction of engagement or translation of one or more male elements entering one or more female elements of the charging port and charging connector respectively. Alternatively, the charging connector may be placed next to, on top of, or underneath the charging port. To further engage the two components, the charging connector may need to be rotated with respect to the charging port, where the direction may then be the axis around which the rotation takes place. In the latter two examples, the charging connector and the charging port may each comprise a surface, whereby the surfaces are adjacent to each other during engagement. In this instance, the predetermined direction may be a line perpendicular to one of the surfaces directed away from that surface, towards the other.

Another embodiment of the invention relates to the system wherein the charging cable conforms to the CHAdeMO, NACS, DC, or CCS charging cable standard, and the charging connector is configured to charge an electric or hybrid car. In this context an electric car is any vehicle configured to transport persons or goods and is at least partially powered by electricity. Thus, the electric car may be a car, lorry, motorbike, electric bike, tractor, bus, caravan or the like.

In another embodiment of the invention, the controller is further configured to de-activate the light source after a predetermined time period or when the movement stops. In this context a predetermined time period may be the length of time for which the light source remains active (i.e., emits light) after a point in time of activation. The predetermined time period may be between 0 seconds and 10 minutes, such as between 1 second and 8 minutes, 2 seconds and 5 minutes or the like. The predetermined time period may be dependant on external conditions such as time of day, external light levels, or the like.

In another embodiment of the invention, the controller is further configured to detect engagement between the charging port and charging connector and then de-active the light source. In this context, engagement may be when the metallic contacts in the charging port and the charging connector are in alignment so that charge can flow through them. Detection of this engagement may be achieved by measuring the voltage across the two components and/or a current travelling between them. Alternatively, the insulative casing may comprise a clip, button, push fit or some other type of mechanical fastening that ensures the two components are positioned so that the electrical contacts of each are aligned. In this instance, the charging port and/or the charging connector may be fitted with a touch sensor, push button or the like activated when the two parts are in engagement. The touch sensor may send a signal to the light source, via the controller, to deactivate the light source. Alternatively, detection of the engagement between the charging connector and the charging port may be based on the detection of data transfer between the two parts.

In another embodiment of the invention, the controller is further configured to de-activate the light source when motion is no longer detected by the motion sensor. In this instance, the motion sensor could initially send a signal to the light source via the controller, which signal activates the light source or keeps the light source active. Then, the motion sensor may stop sending the signal, when it no longer senses motion, whereby the light source deactivates. Moreover, there may be a delay between the light source receiving a signal to deactivate and the light source actually stops emitting radiation. This delay may be between 1 second and 2 seconds, 1 second and 5 seconds,5 seconds and 10 seconds or the like.

In another embodiment of the invention, the controller is galvanically connected to the charging cable. In this context, galvanically connected means that there is a direct current path between the two components. Therefore, the controller and the charging cable may be directly connected by wires, metals pads, pins, or other types of contacts. Note that, a galvanic connection may also facilitate the powering of the light source and the motion sensor.

In another embodiment of the invention, the controller is inductively or capacitively connected to the charging cable. In this context, inductively connected means that there is no direct galvanic contact between the components and that the charge/power takes place via induction or capacitively. In this embodiment, therefore, both the controller and the charging cable may be connected to/comprise an inductance coil. Note that an inductive connection may also facilitate the powering of the light and the motion sensor.

In another embodiment of the invention, the system further comprises a power storage, the power storage may be configured to power the controller. In this context a power storage is a device that may capture energy at one time for use at a later time. In other words, the power storage contains a supply of energy that can be used to power/charge another electronic device. Various types of power storage exist, such as batteries, capacitors or the like. The power storage is connected galvanically or otherwise to the controller so that it may charge/power the controller. Note that the power storage may also facilitate the powering of the light and the motion sensor. The advantage of an internal power source is that it may power the light source irrespective of whether the cable is powered or connected. The internal power storage may also be preferred where it is undesirable to derive power from the cable.

A second aspect of the invention relates to an assembly of a charging connector and an illuminating apparatus, the illuminating apparatus comprising:
i. a light source configured to emit and/or diffuse light in a predetermined direction,
ii. a motion sensor configured to detect motion of the illuminating apparatus, and
iii. a controller configured to receive information from the motion sensor and as a result thereof activate the light source,
wherein the illuminating apparatus is configured to be attached to the charging connector.

In this context, the charging connector, light source, predetermined direction, motion sensor controller and information are all as described above.

Clearly all embodiments, situations, descriptions and considerations made in relation to the first aspect of the invention are equally applicable to the second aspect of the invention.

In this context an illuminating apparatus is an electronic hardware device that can detect movement and subsequently activate the light source.

The illuminating apparatus may comprise a housing, which may be made of moulded plastic, composite, metal or similar material and shaped such that it may be fitted over, inserted into, or otherwise removably attached to the charging connector. The housing may further comprise clips, threads, a fabric, plastic or leather strap, rope or other fastenings to facilitate the attachment. The illuminating apparatus may be removably attached or attachable to the charging connector.

In this context, the light source, controller and motion sensor may be attached to or inserted into the housing of the illuminating apparatus. A strap may be provided for attaching the illuminating apparatus and the charging connector and the light source, controller or motion sensor may be attached to or inserted into the strap.

In one embodiment, the charging connector is configured to engage with a charging port by a relative motion along the predetermined direction. This is similar to the technology described in the previous aspect above. Note that in this embodiment, the housing of the illumination apparatus may be shaped such that it engages with the charging port. Alternatively, the housing may be shaped such that it does not engage with the charging port and therefore does not interfere with the engagement between the charging connector and the charging port.

In one embodiment, the assembly further comprises a power source configured to power the controller. The power source may be as described above. Note that in this instance the power source may be attached to the housing of the illuminating apparatus or any strap thereof.

In one embodiment, the controller is galvanically connected to the charging cable. The galvanic connection may be described above. In this instance, the illuminating apparatus may also be fitted with external or internal metallic or otherwise electrical contacts so that when the illuminating apparatus is attached to the charging connector, a galvanic connection is formed, allowing the controller to be powered by the charging cable. A galvanic connection may also or alternatively be used to power the motion sensor and/or light source.

In one embodiment, the controller is inductively connected to the charging cable. The inductive connection may be as described above. In this instance, an induction coil for facilitating the inductive charging of the controller may be inserted or otherwise attached to the housing of the illuminating apparatus.

A third aspect of the invention relates to a method of operating the system according to the first aspect of the invention, the method comprising:
a. the motion sensor detecting movement of the charging connector and outputting information and
b. the controller receiving the information and activating the light source.

The motion sensor, charging connector, information, controller and light source may all be placed or powered as described above.

Clearly all embodiments, situations, descriptions and considerations made in relation to the first and second aspects of the invention are equally applicable to the third aspect of the invention.

One embodiment of the method includes the additional step, after step b, of the controller turning off the light source after a predetermined time period. In this context, the predetermined amount of time may be as described above.

One embodiment of the method includes the additional steps, after step b, of:
c. the controller detecting an engagement between the charging port and charging connector, and
d. upon detection of the engagement, the controller turning off the light source.

In this context, engagement between the charging connection and the charging port and the detection of the engagement between the two parts may be as described above. The light source and controller may be also as described above.

One embodiment of the method relates to the controller being powered by the charging cable via a galvanic connection. In this instance, the galvanic connection may be as described above.

One embodiment of the method relates to the controller being powered by the charging cable via an inductive connection. In this instance, the inductive connection may be as described above.

Another aspect of the invention relates to a method of operating the assembly according to the second aspect of the invention, the method comprising:
a. attaching the illuminating apparatus to the charging connector,
b. the motion sensor detecting movement of the illuminating apparatus and outputting information, and
c. the controller receiving the information and activating the light source.

In this context, the illumination apparatus, motion sensor, information, controller and light source are all as described above.

Clearly all embodiments, situations, descriptions and considerations made in relation to the first, second and third aspects of the invention are equally applicable to this aspect of the invention.

In this context, attachment may be the engagement of the illuminating apparatus with the charging connector. The act of attachment may be pushing the illuminating apparatus into the charging connector or vice versa. The act of attachment may involve screwing the illuminating apparatus onto the charging connector, or vice versa. Therefore, as previously discussed, the illuminating apparatus and charging connector may comprise a matching threaded connection to facilitate the attachment. Alternatively, the charging connector and the illuminating apparatus may comprise matching/aligning holes whereby attachment of the two parts may be achieved by e.g. additional screws. The charging connector may comprise a slot into which the illuminating apparatus may be pushed, or vice versa. Note that the attachment may also involve gluing or otherwise permanently fastening the charging connector and the illuminating apparatus together, in addition to other methods of attachment.

As discussed above, the illuminating apparatus may comprise a strap, belt, Velcro attachment or the like and thus the act of attachment may be wrapping, tying, fastening, or binding the illuminating apparatus to the charging connector (or vice versa) via the strap, belt, Velcro attachment or the like.

One embodiment of this aspect of the invention relates to a method of operating the assembly where, after step c, the step of the controller turning off the light source after a predetermined timer period. In this instance, the predetermined time period may be as described above.

One embodiment of this aspect of the invention relates to the method further comprising, after step c, the steps of:
d. the controller detecting an engagement of the charging port with the charging connector and/or the illuminating apparatus, and
e. upon detection of the engagement, the controller turning off the light source.

In this instance, the controller and light source may be as described above.

In this aspect, the controller may detect that the charging port is engaged with the illuminating apparatus instead of detecting engagement between the charging port and the charging connector. The detection of the engagement may be via a switch, activated when the two parts are engaged. The switch therefore may be a push button, touch sensor, light sensor, pressure switch, proximity switch or the like.

Also, the illuminating apparatus may comprise metallic contacts to facilitate a galvanic connection between the charging port and the illuminating apparatus upon engagement. Further alternatively, the illuminating apparatus may comprise means for an inductive connection with the charging port. In the instance of the galvanic connection, the voltage across the two parts may be measured in order to detect engagement. Moreover, initial data may be exchanged through the galvanic or inductive connection between the illuminating apparatus and the charging port, and a successful data exchange used to determine engagement.

One embodiment of the invention relates to a method of operating the assembly wherein the controller is powered by the charging cable via a galvanic connection. In this instance the galvanic connection may be as described above.

One embodiment of the invention relates to a method of operating the assembly wherein the controller is powered by the charging cable via an inductive connection. In this instance the inductive connection may be as described above.
Fig. 1 shows an embodiment of the system where the system is used to illuminate a charging port situated on an electric car.
Fig. 2 shows an embodiment of the invention where the controller is galvanically connected to the charging cable.
Fig. 3 shows an embodiment of the invention where the controller is inductively connected to the charging cable.
Fig. 4 shows an embodiment of the assembly where an illuminating device is attached to a charging connector.
Fig. 5 shows an embodiment of the assembly where the controller is situated on the illuminating device and is galvanically connected to the charging cable.
Fig. 6 shows an embodiment of the assembly where the controller is situated on the illuminating device and is inductively connected to the charging cable.

### DETAILED DISCLOSURE OF THE INVENTION

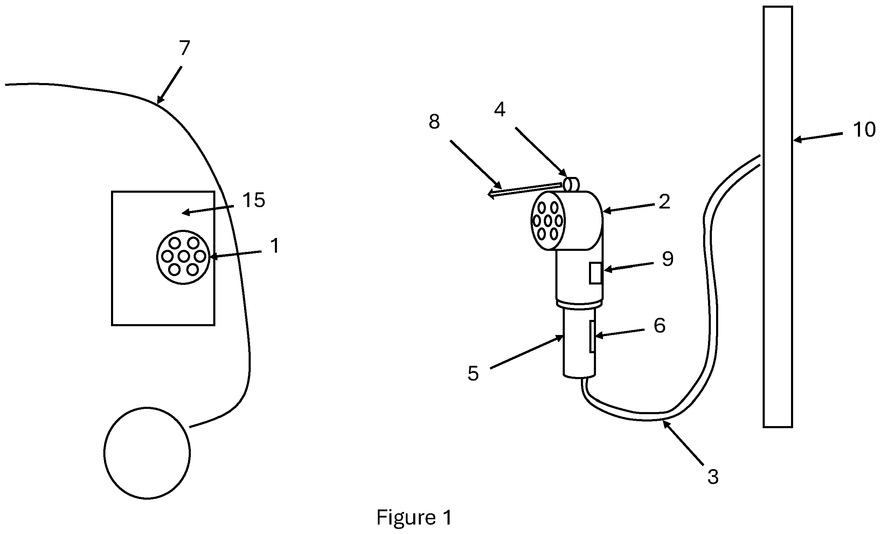

Figure 1 shows an example of the system for illuminating a charging port 1. The charging port 1 in this example is located on a car 7. In this example, a charging cable 3 is permanently attached to a charging source 10. At the other end of the charging cable 3 is a charging connector 2. The charging port 1 and charging connector 2 are configured to engage, and when engaged, charge may pass from the charge source 10 to, in this example, the car 7. The charging port1 may then be attached to a battery 15 or other charge storage system. Thus, when the charging port 1 and the charging connector 2 are engaged, charge may flow through the cable 3 and power the car 7 and/or charge the car battery 15.

The charging port 1 may be a male or a female connector. The charging port 1 may comprise any number of pins. The charging port 1 may conform to the CHAdeMO, NACS, CCS or similar standards for charging connectors. Thus, the charging port 1 may be configured for powering and/or charging an electric car.

The charging connector 2 is designed to engage with the charging port 1 as described above. Thus, the charging port 1 and the charging connector 2 must be compatible in a way that the charging port 1 may be inserted, mated with, surround, or otherwise be connected to the charging connector 2, or vice versa. If, for example, the charging port 1 is female, the charging connector 2 may be male, or vice versa. Moreover, the engagement of the charging port 1 and the charging connector 2 should be enabled by the charging connector 2 moving with relative motion along a predetermined direction 8, e.g., towards the centre of the charging port 1. Note that the predetermined direction 8 could be one around an axis which the charging connector 2 is rotated to form an engagement with the charging port 1.

The charging connector 2 may also comprise a plastic moulding, composite, metal or such like, of a desired shape such as a circle, square, triangle or the like. The charging connector 2 may be a compatible shape to the shape of the charging port 1, the charging port also may comprise a plastic moulding (or the like). The pins of both the charging port and/or charging connector (1,2 respectively) may be held in place by the plastic moulding, (composite, metal or the like). The charging port and charging connector (1,2 respectively) may also comprise non-permanent fastening for example by use of a push fit, thread, clip, or the like to facilitate engagement.

The charging connector 2 may further hold or otherwise comprise at least one light source 4, such as an LED or another type of electronic illuminating device or light source. The light 4 may be inserted into the charging connector 2. There may be a plurality of lights 4 inserted into the plastic (or other similar material) moulding of the charging connector 1 or attached to the outside of the plastic moulding of the second charging connector 2. The light(s) 4 may provide illumination so that the charging port 1 may be easily located and the charging connector 2 may be easily attached to the charging port 1. In other words, the lights 4 may provide visibility for the connection of the charging port 1 and the charging connector 2. The light(s) 4 may be white, blue, red, yellow, green, pink, purple or the like. The direction of the radiation emitted may be along a first direction 8. The first direction 8 may be along the charging connector 2 and nominally point towards the charging port 1.

The charging connector 2 may also comprise a handle 5. The handle 5 may be designed such that a human operator may grasp and manoeuvre the charging connector 2. The handle 5 may be made from moulded plastic, composite, metal or the like.

The charging connector 2 may further comprise a motion sensor 6. The motion sensor 6 may be an accelerometer, a tilt sensor, a rotation sensor, vibration sensor or the like. In some examples the motion sensor 6 may be an IR, ultrasonic or similar sensor that is triggered when the operator grabs the handle 5. The motion sensor 6 preferably is located such that the motion sensor 6 is activated when the operator grasps and manoeuvres the handle 5, causing the charging connector 2 to also move. Thus, the motion sensor 6 may be placed on, or near to the handle 5.

The charging connector 2 also comprises a controller 9. The controller 9 may be a microprocessor. The controller 9 also receives a signal, the signal indicating movement of the charging connector 2, from motion sensor 6 and as a result the controller may turn on the light 4.

In one example, the charging connector 2 may also comprise a power storage 13. Therefore, in this example the power storage 13 powers the controller 9. It may also power the light(s) 4 and the motion sensor 6. The power storage 13 may be a battery, capacitor, accumulator or the like. The power storage 13 may comprise a rechargeable battery.

Note that other examples of objects, in addition to the car 7, to be charged may include electronic lawnmowers, motorbikes, electronic bikes, electronic vans, electronic vehicles, or the like. Other examples of objects may include laptops, cell phones, tablets or the like.

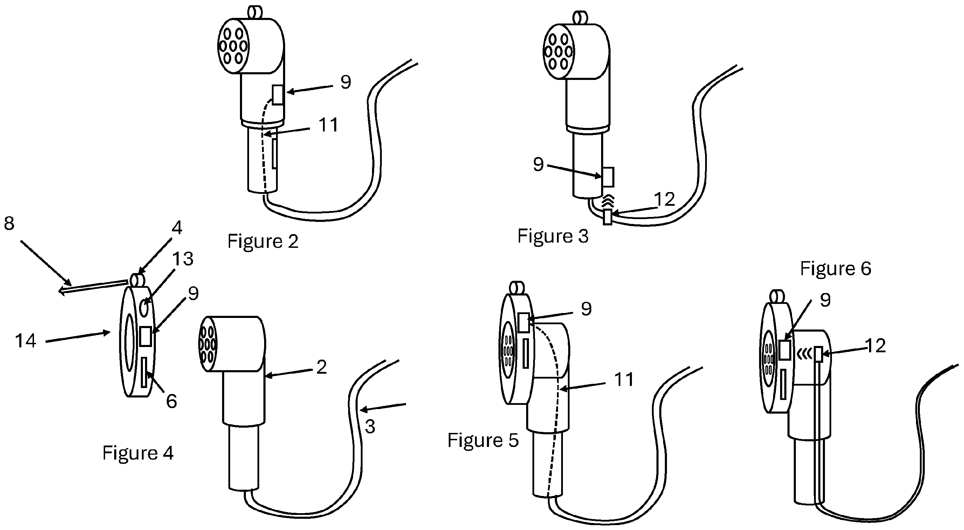

Figure 2 shows an example of the system wherein the charging cable 3 is galvanically connected 11 to the controller 9. The galvanic connection 11 may be through wires, metal plates, contacts or the like. The galvanic connection 11 allows the charging cable 3 to power the controller 9. The galvanic connection 11 may also facilitate the powering of the light 4 and the motion sensor 6.

Figure 3 shows an example of the system wherein the charging cable 3 is inductively connected to the controller 9. Thus, it may be that both the charging cable 3 and the controller 9 comprise induction coils. When an alternating current passes through the charging cable 3, a magnetic field is created, which fluctuates in strength because the electric current's amplitude is fluctuating. This magnetic field creates/induces an alternating electric current in the controller's 9 induction coil, thus providing power to the controller 9. The inductive connection 12 may also facilitate the powering of the light 4 and the motion sensor 6.

Figure 4 shows an example of an illuminating apparatus 14. In this example the illuminating apparatus can be attached to a charging connector 2. The attachment may be non-permanent (e.g., via push fit engagement, screwed on, tied on, Velcro, clipped on etc.) or permanent (e.g., glued on). Once the illuminating apparatus is attached to the charging connector 2, the charging connector 2 can be engaged with a charging port 1 and used as described above.

The illuminating apparatus 14 may have a housing made of moulded plastic and shaped such that it may be fitted over, inserted into, or otherwise removable attached to the charging connector 2. The housing may further comprise clips, threads or other fastenings to facilitate the attachment. The illuminating apparatus may comprise a fabric, plastic or leather strap, rope or such fastening to allow it to be removably attached to the charging connector 2.

In this example, the illuminating apparatus 14 also comprises a light 4, which as described above in the previous example. In this example, the light 4 is attached to the illuminating apparatus, and the direction of the light 8, and may be facing away from the charging connector 2, as shown in Figure 4.

In this example, the illuminating apparatus 14 also comprises a controller 9, whereby the controller 9 may be detailed above in the previous example.

In this example, the illuminating apparatus 14 also comprises a power source 13, whereby the power source 13 may be as detailed above in the previous example.

In this example, the illuminating apparatus 14 also comprises a motion sensor 6, whereby the motion sensor 6 may be as detailed above in the previous example. However, in this example, the motion sensor is attached to the illuminating apparatus 14 and thus senses when the illuminating apparatus 14 moves. As with the previous example, the controller 9 receives the sensor information from the motion sensor 6 and turns on the light 4.

Figure 5 shows the illuminating apparatus 14, attached to the charging connector 2, whereby the controller 9 is connected galvanically 11 to the charging cable 3. The galactical connection 11 may be achieved through wires, pads, contacts or the like. The galvanic connection 11 facilitates the powering of the controller 9 through by the charging cable 3. The galvanic connection 11 may facilitate the powering of the light(s) 4, the motion sensor 6.

Figure 6 shows the illuminating apparatus 14, attached to the charging connector 2, whereby the controller 9 is connected inductively 12 to the charging cable 3. The inductive connection 12 may be achieved through inductive coils or the like. The inductive connection 12 facilitates the powering of the controller 9 through by the charging cable 3. The inductive connection 12 may facilitate the powering of the light 4, the motion sensor 6.

## Claims

1. A system for illuminating a charging port, the system comprising:
a. a charging connector, configured to engage with the charging port, connected to a charging cable and comprising:
i. a light source configured to emit radiation in a predetermined direction,
ii. a motion sensor configured to detect motion of the charging connector and
iii. a controller configured to receive information from the motion sensor and as a result thereof activate the light source.

2. A system according to claim 1, where the charging connector is configured to engage with the charging port by a relative motion along the predetermined direction.

3. The system according to any of the preceding claims wherein the charging cable conforms to the CHAdeMO, NACS or CCS charging cable standard, and the charging connector is configured to charge an electric car.

4. The system according to any of the preceding claims, wherein the controller is further configured to de-activate the light source after a predetermined time period.

5. The system according to any of the preceding claims, wherein the controller is further configured to de-activate the light source when motion is no longer detected by the motion sensor.

6. The system according to any of the preceding claims wherein the controller is galvanically connected to the charging cable.

7. The system according to any of the preceding claims wherein the controller is inductively connected to the charging cable.

8. The system according to any of the preceding claims further comprising a power storage, the power storage configured to power the controller.

9. An assembly of a charging connector and an illuminating apparatus, the illuminating apparatus comprising:
iv. a light source configured to emit light in a predetermined direction,
v. a motion sensor configured to detect motion of the illuminating apparatus, and
vi. a controller configured to receive information from the motion sensor and as a result thereof activate the light source,
wherein the illuminating apparatus is configured to be attached to the charging connector.

10. An assembly according to claim 10, further comprising a power source attached to the illuminating apparatus and configured to power the controller.

11. A method of operating the system according to claim 1, the method comprising:
a. the motion sensor detecting movement of the charging connector and outputting information and
b. the controller receiving the information and activating the light source.

12. A method of operating the system according to claim 11, further comprising after step b, the controller turning off the light source after a predetermined amount of time.

13. A method of operating the system according to claim 11 wherein the controller is powered by the charging cable via a galvanic connection.

14. A method of operating the system according to claim 11, wherein the controller is powered by the charging cable via an inductive connection.

15. A method of operating the assembly according to claim 9, the method comprising:
a. attaching the illuminating apparatus to the charging connector,
b. the motion sensor detecting movement of the illuminating apparatus and outputting information, and
c. the controller receiving the information and activating the light source.
